# EUROPEAN PATENT APPLICATION

(11) **EP 1 852 296 A1**
(43) Date of publication of application: **07.11.2007**
(21) Application number: 06425307.3
(22) Date of filing: 05.05.2006
(51) Int. Cl.: B60K 15/03, B60N 2/00, B60R 19/48, C08K 7/06, C08K 9/08, F02M 55/02, G01B 7/16, G01F 23/22, G01L 1/18, G01P 15/12

(54) **Motor-vehicle component with a structure of polymeric nanocomposite material containing carbon nanotubes and having integrated sensor capability**

(71) Applicant: C.R.F. SOCIETA' CONSORTILE PER AZIONI, 10043 Orbassano (Torino) (IT)
(72) Inventor: Veca, Antonio, 10020 Casalborgone (Torino) (IT); Alacqua, Stefano, 10090 Rivoli Cascine Vica (Torino) (IT); Zanella, Alessandro, 10136 Torino (IT); Innocenti, Gianfranco, 19949 Rivalta (Torino) (IT)
(74) Representative: Notaro, Giancarlo

(57) **Abstract**

A motor-vehicle component, such as for example a fuel tank, or a pipe for the supply of fuel to the engine of the motor vehicle, or a motor-vehicle seat, or the bumper, has a structure at least partially made up of polymeric nanocomposite material containing carbon nanotubes. Associated to the structure are two electrical terminals, and carbon nanotubes are arranged so as to create a continuous electrical connection between said terminals. Electronic control and processing means are connected to said terminals in such a way as to detect the variation in the electrical resistance of the structure made of polymeric nanocomposite material containing carbon nanotubes as its strain varies. It is thus possible, for example, to obtain a signal indicating the degree of filling of the tank, or the pressure existing within the pipe, or the presence of an occupant on the seat or his posture, or pressures and/or impact to which the bumper is subjected.

## Description

The present invention relates in general to the field of structures made of polymeric nanocomposite material containing carbon nanotubes and regards in particular various types of motor-vehicle components, the structure of which is at least partially made of said material.

Carbon nanotubes (CNTs) are one of the allotropic forms of carbon, alongside graphite, diamond and fullerene (Physics World, "Carbon Nanotubes", January 1998).

Carbon nanotubes are concentric cylindrical structures constituted by sheets of graphite rolled around a central axis. On account of the presence of pentagonal rings, at the two ends of the cylindrical structure the walls bend until they close in on themselves to form a sort of conical or hemispherical cap with a molecular geometry similar to that of fullerenes.

Carbon nanotubes often present structural defects or imperfections in the geometrical structure, such as, for example, the presence of pentagonal or heptagonal rings along the wall of the tube.

Nanotubes may be single-wall or multi-wall ones. Single-wall nanotubes (SWNTs) are constituted by a single sheet of graphite rolled around a central axis; multi-wall nanotubes (MWNTs) are constituted by a series of concentric cylinders set at a distance apart of 2-4 nm. Their length can reach some tens of microns.

The extremely high ratio between length and diameter, approximately 10⁴-10⁵, enables them to be considered as virtually one-dimensional nanostructures, which bestow upon these molecules peculiar mechanical, electrical and thermal properties.

Appearing in Table 1 below are some properties of carbon nanotubes.

**Table 1**

| **Properties of carbon nanotubes** | |
|---|---|
| Ultimate strength | Σᵣ ~ 100 GPa |
| Young's modulus | E ~ 1,2 TPa (SWNTs) |
| | E ~ 1,5 TPa (MWNTs) |
| Density | d ~ 1,3 g/cm³ |
| Electrical resistivity | P ~ 10⁻⁶ Ω·m |
| Thermal conductivity | k ~ 2000 W·m⁻¹·K⁻¹ |
| Surface area per unit mass | ~1600 m²/g |
| Thermal stability | ~3000 K in vacuum; |
| | ~700 K in air |

Understood by the term "polymeric nanocomposite containing carbon nanotubes" is a material formed by a polymeric matrix and by a filler constituted by carbon nanotubes.

The piezoresistive characteristics of carbon nanotubes have already been exploited for making sensors, for example strain gauges, designed to be positioned in desired points of a structure to be monitored.

The purpose of the present invention is to exploit the structural and functional characteristics of the materials described above for creating a new class of components designed to be used on motor vehicles.

According to the main aspect of the invention, the purpose is consequently to produce a motor-vehicle component comprising a structure at least partially constituted by a polymeric matrix with a carbon-nanotube filler, in which associated to the part of the structure made of polymeric nanocomposite material are two electrical terminals, in which carbon nanotubes forming part of said structure are arranged so as to give rise to a continuous electrical connection between the aforesaid electrical terminals, and in which associated to said component are electronic control and processing means, which are connected to said electrical terminals and are designed to detect the variation in the electrical resistance of the part of structure made up of polymeric nanocomposite material as a function of the strain to which it is subjected, in such a way that the entire part of the structure of said component that is made up of polymeric nanocomposite material functions as a distributed strain gauge.

According to a first possible application, the aforesaid component, is, for example, represented by the fuel tank of a motor vehicle. In a first embodiment, the entire structure of the tank is made of polymeric nanocomposite material containing carbon nanotubes. In one variant, only a part of the structure of the tank, preferably set facing the internal cavity of the tank, is made of said material. The structure of the tank is designed in such a way as to be subject to strain as a consequence of being filled with fuel so that the distributed sensor constituted by the aforesaid structure made of polymeric nanocomposite material containing carbon nanotubes can be used as sensor for determining the degree of filling of the tank. At the same time, said distributed sensor can also be used for detecting any possible damage to the tank. The use of the material described above finally enables addition to the functional characteristics mentioned above also of characteristics of high resistance to impact, thanks to the improvement of the structural characteristics of the component due to the presence of the carbon-nanotube reinforcement.

According to a further aspect, the invention is applicable, for example, to provide a pipe for the supply of fuel to the engine of the motor vehicle. Preferably, the entire structure of the pipe is made up of polymeric nanocomposite material containing carbon nanotubes, and the two electrical terminals are associated to the two ends of the pipe so as to pick up a signal that is a function of the pressure existing in the pipe. A different degree of pressure determines in fact a different strain of the wall of the pipe, which is made flexible, the different degree of strain being thus detectable using the entire structure of the pipe as distributed sensor.

Further characteristics and advantages of the invention will emerge from the ensuing description, with reference to the annexed plate of drawings, which are provided purely by way of non-limiting example and in which:
- Figure 1 is a schematic perspective view of a fuel tank for motor vehicles made in accordance with the present invention;
- Figure 2 illustrates a variant of Figure 1;
- Figure 3 is a schematic cross-sectional view of a part of the tank of Figure 2;
- Figure 4 is a schematic cross-sectional view of a pipe for the supply of fuel to a motor-vehicle engine, made in compliance with the teachings of the present invention; and
- Figures 5-7 show the application of the invention to a motor-vehicle seat and to the motor-vehicle bumper, the latter in two different versions.

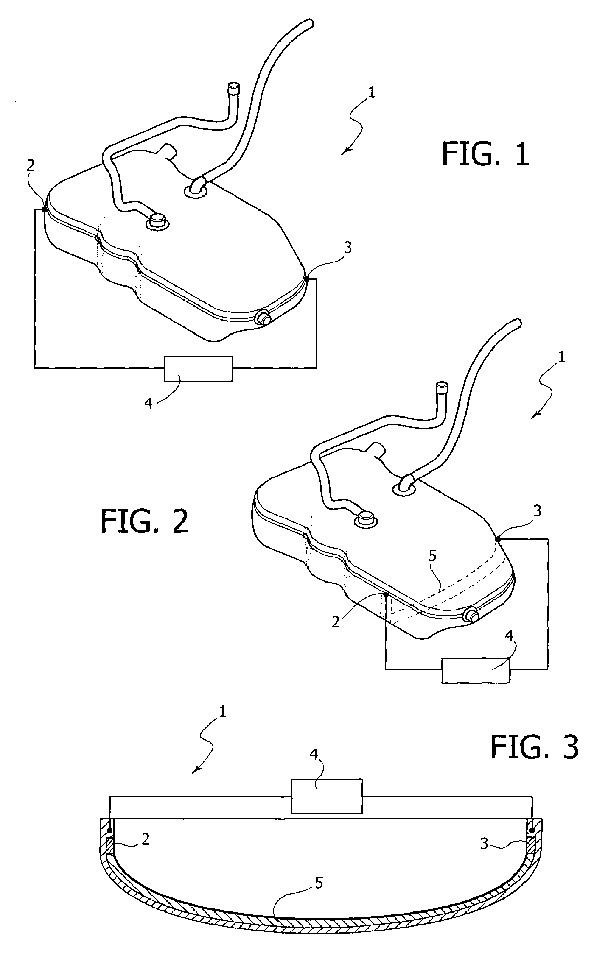

In Figure 1, the reference number 1 designates as a whole a tank for motor vehicles, having a structure entirely constituted by a polymeric nanocomposite material containing carbon nanotubes. Associated to the tank are two electrical terminals 2, 3. The nanotubes of the structure are arranged in such a way as to create a continuity of electrical connection between said terminals 2, 3. Electronic control and processing means 4 are connected to the terminals 2, 3 to exploit the characteristics of piezoresistivity of the material in order to control the degree of filling of the tank. As the level of the fuel within the tank varies, the degree of strain of the structure of the tank, which is designed in such a way as to have a certain flexibility, varies, the variation of strain giving rise to a variation in the electrical resistance that is detected by the control and processing unit 4, which is thus able to issue at output a signal indicating the degree of filling of the tank, which can be sent to an indicator present on the dashboard on board the motor vehicle. In addition to the aforesaid characteristics, the tank in any case presents high characteristics of resistance to impact, and is thus particularly safe in the event of collision of the motor vehicle, thanks to the reinforcement due to the presence of the carbon nanotubes. As may be seen, the entire structure of the tank functions as a distributed sensor. In addition to the strains caused by the filling of the tank with fuel, the sensor thus obtained is able to detect also any possible failure of the tank itself, due for example to a collision.

Of course, the processing and control means 4 can be programmed so as to discriminate the strains to be detected with respect to non-significant strains, such as for example the ones due to the fact that the motor vehicle is travelling on rough terrain.

Figure 2 illustrates a variant in which the structure made of polymeric nanocomposite material is limited only to a strip 5 that is co-moulded on the internal surface of the structure of the tank. Said arrangement is also visible in cross section in Figure 3.

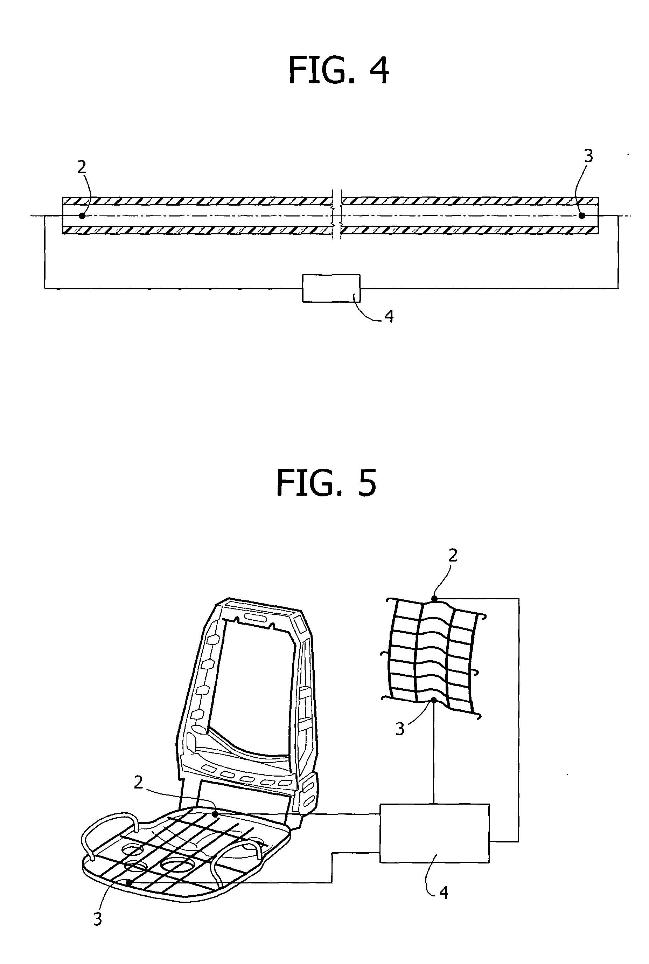

Figure 4 illustrates another application of the invention, in which the component is a pipe for the supply of fuel to the engine of the motor vehicle. The wall of the pipe is made entirely of polymeric nanocomposite material containing carbon nanotubes. The two terminals 2, 3 are connected at the opposite ends of the pipe. The structure of the pipe is designed in such a way as to present a certain flexibility, so as to undergo a degree of strain that differs as a function of the pressure existing within the pipe. The distributed sensor thus constituted by the entire structure can be exploited as sensor for detecting the pressure in the pipe.

Figure 5 illustrates a further application of the invention, in which the component is a panel made of polymeric nanocomposite material containing nanotubes associated to the frame of the cushion or to the frame of the backrest of a motor-vehicle seat. The entire structure of the panel functions as distributed sensor, designed, for example, to detect the presence of the occupant of the seat in order to activate an airbag device on the motor vehicle or else to detect the correct posture of the occupant.

According to a variant, it is possible to envisage integration of fibres consisting of nanocomposite material containing carbon nanotubes in the upholstery fabric of the seat.

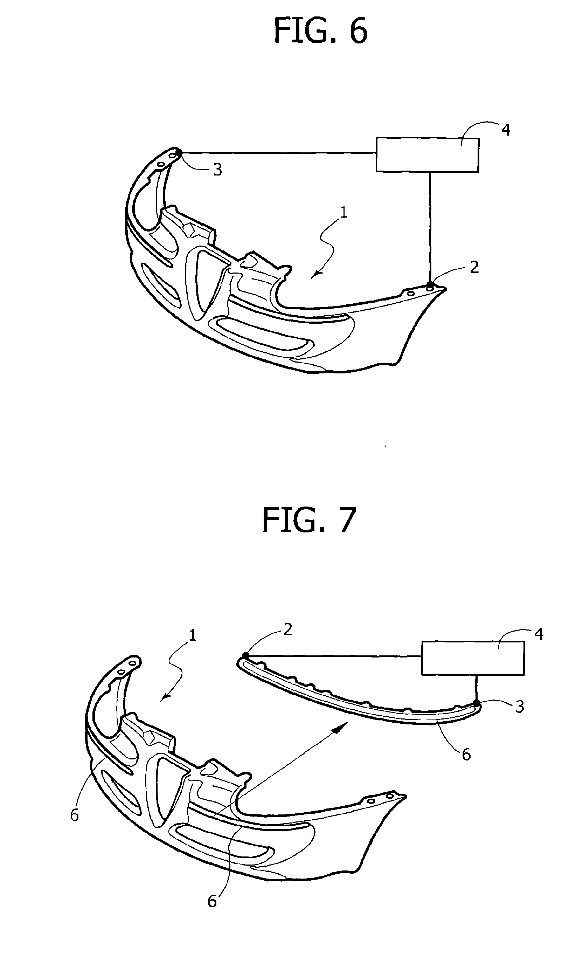

Figure 6 illustrates another application of the invention, in which the component is the bumper of a motor vehicle. The bumper 1 can have a structure entirely made up of nanotube-based nanocomposite material with terminals 2, 3, which are connected to the processing and control unit 4 in order to create a distributed-pressure and/or impact sensor, at the same time exploiting the characteristics of elasticity and resistance to impact determined by the presence of carbon nanotubes.

Figure 7 illustrates a variant in which the nanocomposite polymeric structure is limited to two mouldings 6 (one of which is visible in exploded view and at an enlarged scale) applied on top of the structure of the bumper 1.

Of course, without prejudice to the principle of the invention, the details of construction and the embodiments may vary widely with respect to what is described and illustrated herein purely by way of example, without thereby departing from the scope of the present invention.

## Claims

1. A motor-vehicle component, comprising a structure at least partially constituted by a polymeric matrix with a carbon-nanotube filler, in which associated to said structure are two electrical terminals (2, 3), and in which carbon nanotubes are arranged so as to give rise to a continuous electrical connection between said electrical terminals (2, 3), and in which associated to said structure are control and processing means (4), which are connected to said electrical terminals and are designed to detect the variation in the electrical resistance of the part of structure made up of polymeric nanocomposite material containing carbon nanotubes as a function of strains to which it is subjected, in such a way that the entire part of the structure of said component that is made up of polymeric nanocomposite material containing carbon nanotubes functions as distributed strain gauge.

2. The component according to Claim 1, **characterized in that** it is represented by the fuel tank of a motor vehicle.

3. The component according to Claim 2, **characterized in that** the entire structure of the tank is made up of polymeric nanocomposite material containing carbon nanotubes.

4. The component according to Claim 2, **characterized in that** the structure made of polymeric nanocomposite material containing carbon nanotubes forms a part of the entire structure of the tank, which is applied on the internal surface of said structure.

5. The component according to Claim 1, **characterized in that** it is represented by a pipe for fuel supply to a motor-vehicle engine, said electrical terminals (2, 3) being associated to the opposite ends of said pipe, and the wall of said pipe being sufficiently flexible as to deform in a variable way as a function of the pressure existing within said pipe, in such a way that said electronic control and processing means are designed to issue at output a signal indicating the pressure existing within the pipe.

6. The component according to Claim 1, **characterized in that** it is represented by a motor-vehicle seat, and **in that** the structure made of polymeric nanocomposite material containing carbon nanotubes constitutes a panel associated to the frame of the cushion or to the frame of the backrest of a motor-vehicle seat, in such a way that said electronic control and processing means are designed to issue at output a signal indicating the presence of an occupant on the seat and/or the correct posture of said occupant.

7. The component according to Claim 1, **characterized in that** it is represented by the bumper of a motor vehicle.

8. The component according to Claim 7, **characterized in that** the entire structure of the bumper is made of polymeric nanocomposite material containing carbon nanotubes in such a way that said electronic control means are designed to monitor pressures and/or impact to which the bumper is subjected.

9. The component according to Claim 7, **characterized in that** the structure made of polymeric nanocomposite material containing carbon nanotubes defines a moulding applied on the structure of the bumper in such a way that said electronic control and processing means are designed to detect the pressures and/or impact to which said moulding is subjected.

10. The component according to Claim 6, **characterized in that** the sensor can be directly obtained by weaving threads constituted by polymeric nanocomposite materials containing carbon nanotubes between the structure of the cushion or of the frame of the backrest of a motor-vehicle seat.

11. The component according to Claim 1, **characterized in that** it is represented by a motor-vehicle seat and **in that** the distributed sensor is constituted by an upholstery fabric of the seat directly obtained by weaving threads or fibres constituted by polymeric nanocomposite materials containing carbon nanotubes together with fibres commonly used for providing said fabrics, thus obtaining a fabric with distributed-sensor capability.
